# EUROPEAN PATENT APPLICATION

(11) **EP 4 357 221 A1**
(43) Date of publication of application: **24.04.2024**
(21) Application number: 23201512.3
(22) Date of filing: 04.10.2023
(51) Int. Cl.: B62D 12/00, B62D 53/02

(54) **WORK VEHICLE**

(30) Priority: 21.10.2022 JP 2022168751
(71) Applicant: Yanmar Holdings Co., Ltd., Osaka-shi, Osaka (JP)
(72) Inventor: DOMINKOVIC, Matej, Crailsheim (DE)
(74) Representative: Dennemeyer & Associates S.A.

(57) **Abstract**

[Problem] To provide a work vehicle capable of maintaining a comfortable steering operation while causing a vehicle body to flexibly follow a change in terrain.

[Solution] A work vehicle 1 includes: a rear-part vehicle body frame 420; and a front-part vehicle body frame 220, wherein the work vehicle 1 includes: a front-part joint part 320 that is present at a rear end of the front-part vehicle body frame 220, and that is provided with a first spherical slide bearing 310b1 and a second spherical slide bearing 310a1 which are placed in an up-down direction, a rear-part joint part 340 that is, via a third spherical slide bearing 341a and via the second spherical slide bearing 310a1, linked with a link member 330 linked with the front-part joint part 320 via the first spherical slide bearing 310b1, and that is present at a head end of the rear-part vehicle body frame 420, and a cylinder 450 that is linked with the front-part joint part 320 via a fourth spherical slide bearing 452, and that is linked with the rear-part vehicle body frame 420 via a fifth spherical slide bearing 451, and at least a part of the fourth spherical slide bearing 452 is placed on the same horizontal plane as at least a part of the second spherical slide bearing 310a1.

## Description

### TECHNICAL FIELD

The present invention relates to a work vehicle.

### BACKGROUND ART

In the related art, it is known that a linkage device that so links the first frame and second frame structures of a wheel loader as to be relatively movable in the transverse direction and in the up-down direction links the first frame and the second frame by a link member via universal bearing devices mounted on the respective first frame and second frame above, and further, links the first frame and the second frame by another universal bearing device below the universal bearing device mounted on the first frame that links the link member.

### (see Patent Document 1)

### PRIOR ART DOCUMENT

### PATENT DOCUMENT

Patent Document 1: US Patent Application Publication No. 2009/0314130 (US, 1)

### SUMMARY OF INVENTION

### TECHNICAL PROBLEM

For turning the wheel loader, the first frame and the second frame are linked by a steering cylinder, and the steering cylinder is extended and contracted in response to a steering operation amount thereby to turn the wheel loader; in the case where the pivotal linking position of the steering cylinder of the first frame is placed above the other universal bearing device, however, performing the steering operation at the time of the first frame and second frame structures relatively moving in the up-down direction (oscillated) causes a problem of deteriorating the steering operability due to the right and left steering angles being different with respect to the right and left steering operation amounts.

The present invention has been made in view of the above problem of the conventional technology; it is an object of the present invention to provide a work vehicle capable of maintaining a good steering operation while causing a vehicle body to flexibly follow a change in terrain.

### SOLUTION TO PROBLEM

A work vehicle according to an aspect of the present invention includes: a rear-part vehicle body frame; and a front-part vehicle body frame so linked to the rear-part vehicle body frame as to be turnable perpendicularly to a horizontal direction and longitudinal direction of the rear-part vehicle body frame, wherein the work vehicle includes: a front-part joint part that is present at a rear end of the front-part vehicle body frame, and that is provided with a first spherical slide bearing and a second spherical slide bearing which are placed in an up-down direction, a rear-part joint part that is, via a third spherical slide bearing and via the second spherical slide bearing, linked with a link member linked with the front-part joint part via the first spherical slide bearing, and that is present at a head end of the rear-part vehicle body frame, and a cylinder that is linked with the front-part joint part via a fourth spherical slide bearing, and that is linked with the rear-part vehicle body frame via a fifth spherical slide bearing, and at least a part of the fourth spherical slide bearing is placed on the same horizontal plane as at least a part of the second spherical slide bearing.

### ADVANTAGEOUS EFFECTS OF INVENTION

The present invention makes it possible to provide a work vehicle capable of maintaining a good steering operation while causing a vehicle body to flexibly follow a change in terrain.

### BRIEF DESCRIPTION OF DRAWINGS

FIG. 1 is a left side view of a wheel loader according to an embodiment of the present invention.
FIG. 2 is a perspective view of a front-part vehicle body frame of the wheel loader according to the embodiment of the present invention.
FIG. 3 is a perspective view, from above, of a rear-part vehicle body frame of the wheel loader according to the embodiment of the present invention.
FIG. 4 is a perspective view, from below, of the rear-part vehicle body frame of the wheel loader according to the embodiment of the present invention.
FIG. 5 is a perspective view of a vehicle body frame of the wheel loader according to the embodiment of the present invention.
FIG. 6 is a perspective view of a link part of the wheel loader according to the embodiment of the present invention.
FIG. 7 is a front view of the vehicle body frame of the wheel loader according to the embodiment of the present invention.
FIG. 8 is an A-A cross-sectional view of the vehicle body frame of the wheel loader according to the embodiment of the present invention.
FIG. 9 is a perspective view of the link part whose leftward twisting is regulated by a regulating member of the wheel loader according to the embodiment of the present invention.

### DESCRIPTION OF EMBODIMENTS

Hereinafter, an embodiment according to the present invention will be described in detail with reference to the accompanying drawings by taking a wheel loader 1 as a typical example of a work vehicle according to the present invention.

Further, in the embodiment, a direction in which the wheel loader 1 travels straight is referred to as a front-rear direction, and a direction orthogonal to the direction in which the wheel loader 1 travels straight is referred to as a right-left direction. These directions are set with reference to an operator seated on a driver's seat in a drive cabin 430.

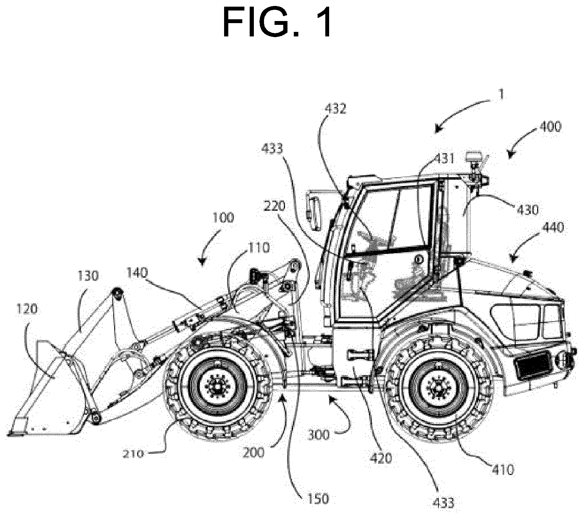

As shown in FIG. 1, the wheel loader 1 includes a front-part vehicle body 200 by which a work device 100 is supported forward in a manner to be moved up and down and which is provided with right and left front wheels 210, and a rear-part vehicle body 400 which is so linked with the front-part vehicle body 200 via a link part 300 as to bend to the right and left by rotating in the horizontal direction and which is provided with right and left rear wheels 410.

The front-part vehicle body 200 includes a front-part vehicle body frame 220, and the right and left front wheels 210 attached by a front-part axle (not shown) mounted on a rear face of the front-part vehicle body frame 220.

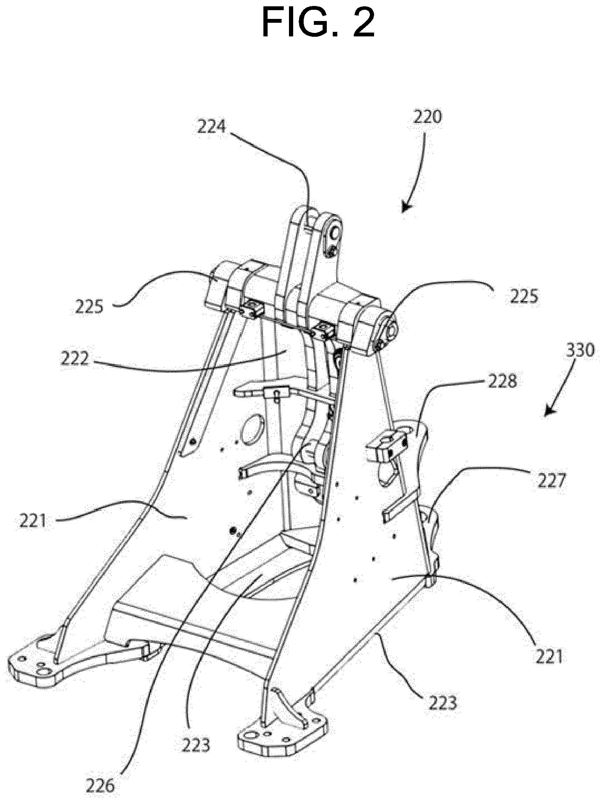

As shown in FIG. 2, the front-part vehicle body frame 220 includes a pair of side walls 221 which are so formed as to be inclined in a manner to rise from the front to the rear, and which are so linked in the front part as to bridge inside by a beam material, a rear wall 222 which is formed, in the rear end of the side wall 221, to a height of about one third from the upper end of the side wall 221, a base part 223 formed in the lower end of the pair of side walls 221, a bucket cylinder support part 224 which is provided above between the pair of side walls 221 and which supports a bucket cylinder 140, a boom support part 225 which supports a boom 110 in the upper part of the pair of side walls 221, a lift cylinder support part 226 which is provided on a front face of the rear wall 222 and which supports a lift cylinder 150, a second protruding part 227 which is a part of the link part 300 and which protrudes rearward from the base part 223, and a first protruding part 228 which is above and parallel to the second protruding part 227 and which protrudes from the lower end of the rear wall 222.

As shown in FIG. 1, the work device 100 includes the boom 110 that is rotatably supported by the boom support part 225 and that is formed of a pair of longitudinal plates extending forward, a bucket 120 swingably supported on an end part of the boom 110, a bell crank 130 by which the bucket 120 is rotatably linked to a front part of a beam material so formed as to bridge the pair of longitudinal plates, the bucket cylinder 140 pivotally linked at respective ends to the bell crank 130 and the bucket cylinder support part 224, and the lift cylinder 150 pivotally linked at respective ends to the beam material's rear part and the lift cylinder support part 226.

As shown in FIG. 1, the rear-part vehicle body 400 includes a rear-part vehicle body frame 420, right and left rear wheels 410 attached by a rear-part axle (not shown) mounted on the rear face of the rear-part vehicle body frame 420, the drive cabin 430 surrounding a drive part placed above the rear-part vehicle body frame 420, and an engine chamber 440 formed by covering, with a bonnet cover, the lower end of the lower part of the drive cabin 430 from the rear end of the rear-part vehicle body frame 420.

An engine (not shown) placed in the engine chamber 440 drives a gear pump (not shown) that pumps a hydraulic oil to the bucket cylinder 140, to the lift cylinder 150, and to a steering cylinder 450 that bends the front-part vehicle body 200 relative to the rear-part vehicle body 400, and a pump (not shown) that pumps the hydraulic oil to a travel motor (not shown) for revolving the front wheel 210 and the rear wheel 410.

A seat 431 on which the operator sits is placed in the drive part in the drive cabin 430, and a steering column 433 that supports a steering wheel 432 in an upper part is placed in front of the seat 431.

The steering wheel 432 is a handle turnably operated for steering, and, via a control valve (not shown), controls, in response to the direction and amount of turn of the steering wheel 432, the amount and direction of the hydraulic oil supplied to the steering cylinder 450, and controls, by the amount of the extension and contraction of a rod of the steering cylinder 450, the direction and amount of the front-part vehicle body 200's right-left bending relative to the rear-part vehicle body 400.

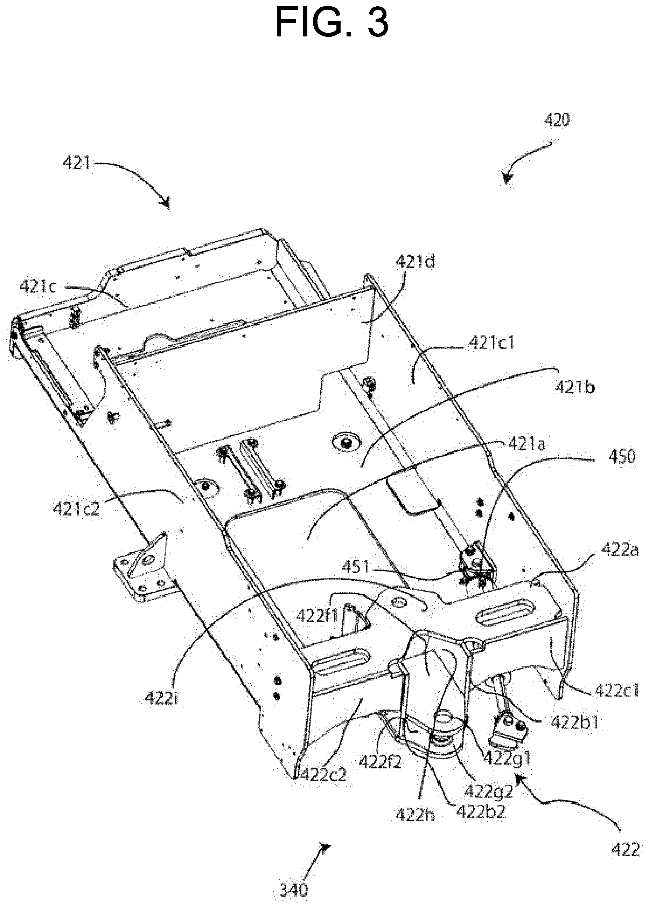

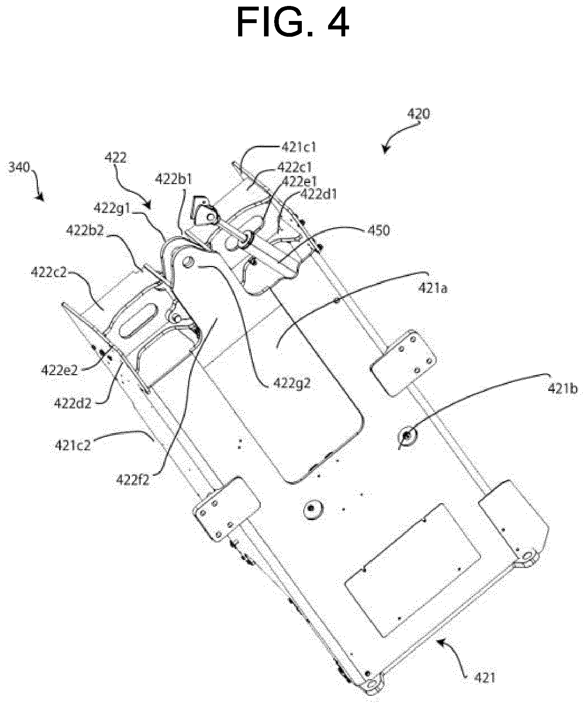

As shown in FIGS. 3 and 4, the rear-part vehicle body frame 420 includes a frame main body part 421 which forms a recessed cutout part 421a from the front part to the middle and which is formed of a pair of longitudinal plates 421c1 and 421c2 extending from the front to the rear of the recessed cutout part 421a on respective sides of a base plate 421b extending from the recessed cutout part 421a's front part to the rear, and a link support part 422 which is so placed in the front part of the frame main body part 421 as to bridge the pair of longitudinal plates 421c1 and 421c2, and which includes a part of the link part 300.

The pair of longitudinal plates 421c1 and 421c2 are extended from the front part to about two thirds of the base plate 421b, and a transverse plate 421d for reinforcement is so connected to the rear parts of the longitudinal plates 421c1 and 421c2 as to bridge between the longitudinal plates 421c1 and 421c2.

A transverse plate 421c extending in the width direction and reinforcing the base plate 421b is connected to the rear end part of the base plate 421b.

The link support part 422 is placed below the drive cabin 430, and the steering cylinder 450 whose tube end part is supported via a fifth spherical slide bearing 451 by a support part protruding on the inner side of the left longitudinal plate 421c1 of the frame main body part 421 is placed below the link support part 422, so that the steering cylinder 450 is placed below the drive cabin 430, that is, below the drive part inside the drive cabin 430.

Adopting the above configuration places a part of the rod of the steering cylinder 450 and the tube of the steering cylinder 450 in the rear-part vehicle body frame 420, making it possible to reduce damage to the steering cylinder 450 which damage is due to contact with an obstacle during the travel.

The link support part 422 has a pair of right and left longitudinal plates 422b1 and 422b2 perpendicularly extending downward to the height of the base plate 421b in the vicinity of the center of a beam plate 422a bridging between the left and right longitudinal plates 421c1 and 421c2 of the frame main body part 421.

The front part and rear part of the longitudinal plate 422b1 have a front plate 422c1 and a rear plate 422d1 bridged between the longitudinal plate 422b1 and the longitudinal plate 421c1.

The front part and rear part of the longitudinal plate 422b2 have a front plate 422c2 and a rear plate 422d2 bridged between the longitudinal plate 422b2 and the longitudinal plate 421c2.

The upper ends of the front plate 422c1, the rear plate 422d1, the front plate 422c2, and the rear plate 422d2 are placed in a position of about one third of the height from the upper ends of the longitudinal plates 422b1 and 422b2, and the lower ends of the front plate 422c1, the rear plate 422d1, the front plate 422c2, and the rear plate 422d2 are placed in a position of about one third of the height from the lower ends of the longitudinal plates 422b1 and 422b2.

The rod of the steering cylinder 450 is so placed as to be positioned below the front plate 422c1.

The tube of the steering cylinder 450 is so placed as to be positioned below the rear plate 422d1. That is, the tube of the steering cylinder 450 is placed below the drive cabin 430, that is, below the drive part in the drive cabin 430.

The lower part of the rear plate 422d1 forms an upwardly recessed cutout part; for bending the front-part vehicle body 200 to the right and left relative to the rear-part vehicle body 400, even turning the steering cylinder 450 to the right and left prevents the rear plate 422d1 from interfering with the steering cylinder 450, making it possible to increase the rigidity of the rear-part vehicle body frame 420.

The upper ends of the front plate 422c1 and rear plate 422d1 are joined to the beam plate 422a, and a reinforcing plate 422e1 is so bridged between the front plate 422c1 and the rear plate 422d1 as to be parallel to the beam plate 422a, and the longitudinal plate 422b1 and the longitudinal plate 421c1 are joined thereby to form a box shape.

The upper ends of the front plate 422c2 and rear plate 422d2 are joined to the beam plate 422a, a reinforcing plate 422e2 is so bridged between the front plate 422c2 and the rear plate 422d2 as to be parallel to the beam plate 422a, and the longitudinal plate 422b2 and the longitudinal plate 421c2 are joined thereby to form a box shape.

These box shapes can increase the rigidity of the link support part 422, making it possible to increase the rigidity of the rear-part vehicle body frame 420.

The beam plate 422a has a recessed cutout part 422h near above the longitudinal plates 422b1 and 422b2, and a protruding part 422i protruding behind the recessed cutout part 422h.

A support plate 422f1 is formed to bridge between the longitudinal plates 422b1 and 422b2 in a manner to be parallel to the beam plate 422a.

A support plate 422f2 is formed at the lower ends of the longitudinal plates 422b1 and 422b2 in a manner to be parallel to the support plate 422f1.

The support plates 422f1 and 422f2 respectively have a protruding part 422g1 and a protruding part 422g2 which protrude forward by substantially the same amount.

The support plate 422f2 extends rearward in a manner to have a space same as the width of the longitudinal plates 422b1 and 422b2, expands in a manner to have the width of the recessed cutout part 421a in the front part of the base plate 421b to be joined to the base plate 421b in the recessed cutout part 421a, and forms a base face of the rear-part vehicle body frame 420 together with the base plate 421b.

The steering cylinder 450 is placed in a position of a height between the protruding part 422g1 and the protruding part 422g2, and turns on an imaginary horizontal plane expanding from between the support plates 422f1 and 422f2.

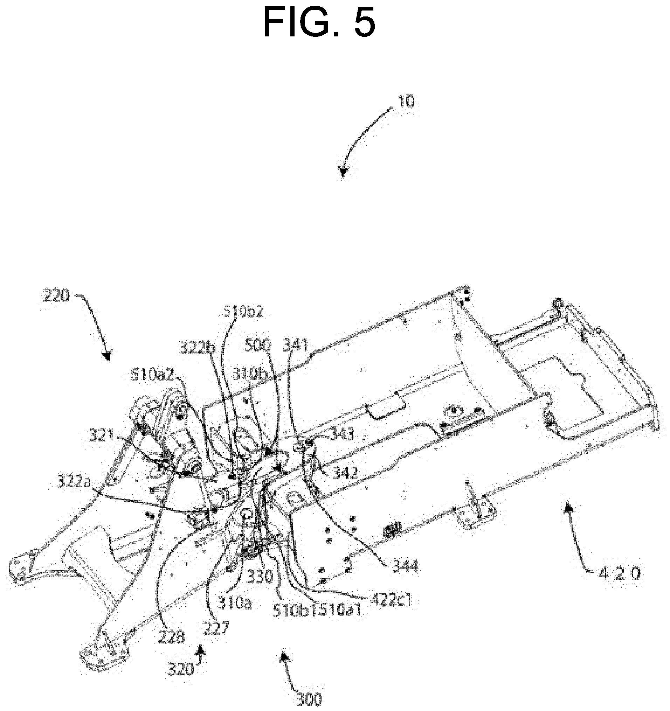

As shown in FIG. 5, the vehicle body frame 10 includes the rear-part vehicle body frame 420, the front-part vehicle body frame 220 linked with the rear-part vehicle body frame 420 via the link part 300 in a manner to be turnable perpendicularly to a horizontal direction and longitudinal direction of the rear-part vehicle body frame 420 thereby to be bendable to the right and left and turnable in a twist direction (roll direction), and a regulating member 500 that regulates maximum positions of the right-left bending and the twisting.

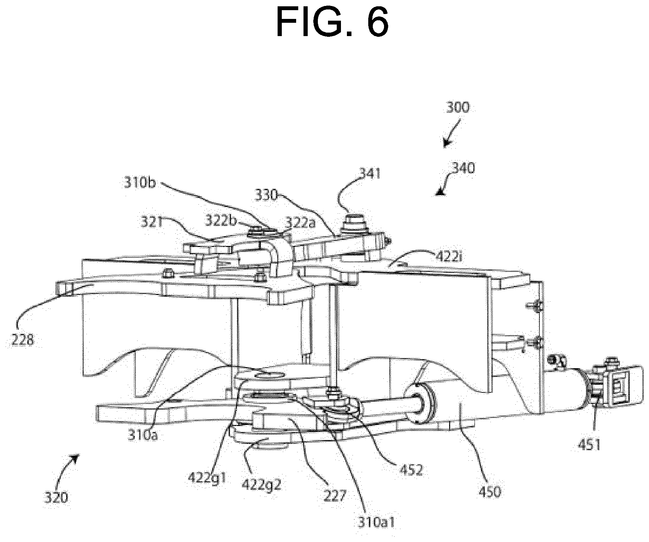

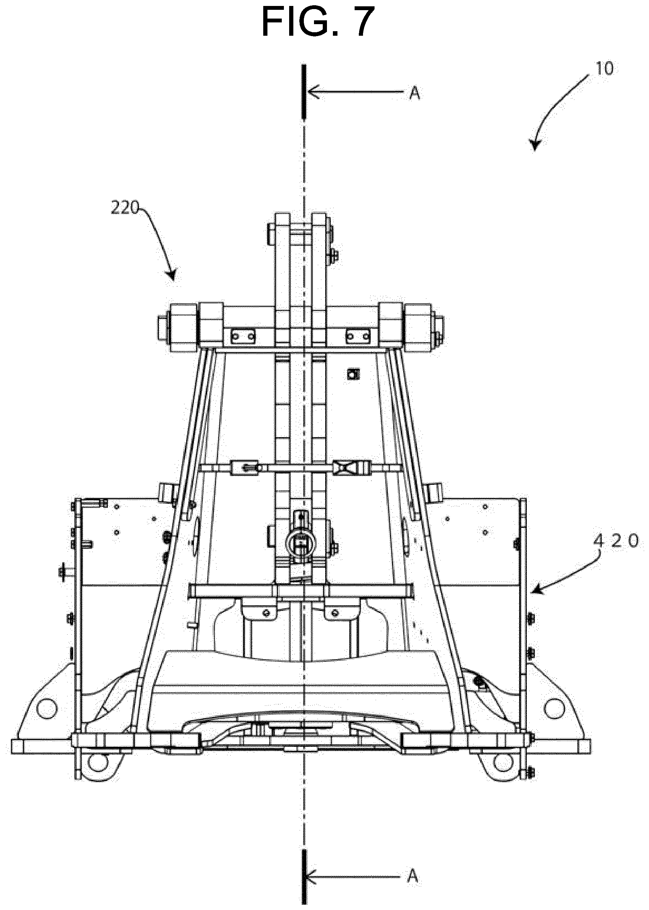

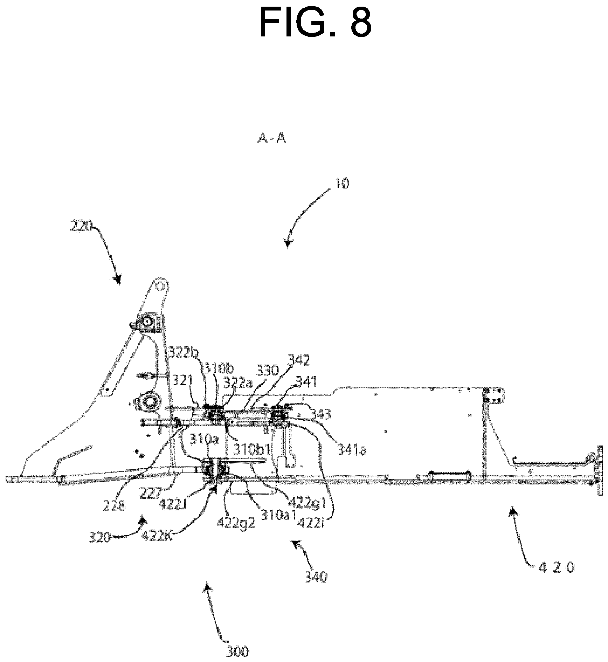

As shown in FIGS. 5 to 8, the link part 300 includes a rear-part joint part 340 that joins the front-part joint part 320 via a first center pin 310a, a second center pin 310b, and a link member 330 so that the front-part joint part 320 is turnable perpendicularly to the horizontal direction and longitudinal direction of the rear-part vehicle body frame 420.

The front-part joint part 320 includes the second protruding part 227, the first protruding part 228, and a support part 321 that extends above and parallel to the first protruding part 228 rearward from the rear wall 222 and that has a pair of leg parts extending downward from the right and left sides and joined to the first protruding part 228.

The rear-part joint part 340 includes the protruding part 422g1, the protruding part 422g2, the protruding part 422i, and a support pin 341 which is inserted into a through hole of the protruding part 422i and is erected.

The first center pin 310a is so placed as to pass, from above, through the protruding part 422g1, the second protruding part 227, and the protruding part 422g2.

The first center pin 310a is fixed from below by a bolt 422k to a fixing plate 422j welded to the protruding part 422g2 on the rear face side.

According to this configuration, a hydraulic hose or a harness extending from the rear-part vehicle body 400 to the front-part vehicle body 200 is not damaged, due to the bending or twisting of the front-part vehicle body 200, by the bolt 422k or the like for fixing the first center pin 310a to the protruding part 422g2.

A second spherical slide bearing 310a1 is placed in a through hole provided in the second protruding part 227, and the first center pin 310a is inserted into the second spherical slide bearing 310a1.

An end part of the rod of the steering cylinder 450 is pivotally linked via a fourth spherical slide bearing 452 to a left side part of the second protruding part 227 in front of the first center pin 310a.

The second protruding part 227 is formed of a flat plate having a horizontal plane shape; thus, at least a part of the second spherical slide bearing 310a1 and at least a part of the fourth spherical slide bearing 452 are present on the same horizontal plane.

According to the above configuration, turning the front-part vehicle body 200 with the second spherical slide bearing 310a1 as a fulcrum perpendicularly to the longitudinal direction of the rear-part vehicle body frame 420, that is, moving the front-part vehicle body 200 in a twist direction (roll direction) with the height of the right and left front wheels 210 of the front-part vehicle body 200 according to the terrain during the wheel loader 1's traveling on an uneven ground can cause the front-part vehicle body 200 to follow the shape of the ground, making it possible to reduce the load applied to the vehicle body frame 10.

Further, when the steering wheel 432 has been operated to the left or right while the front-part vehicle body 200 is turned in the twist direction; due to the fourth spherical slide bearing 452 being present on the same horizontal plane as the second spherical slide bearing 310a1 as the fulcrum, the front-part vehicle body 200's amounts of right and left bending relative to the rear-part vehicle body 400 relative to the right and left operation amount of the steering wheel 432, that is, the extension amount of the steering cylinder 450, are substantially equal, thus making it possible to maintain a comfortable steering operation while causing the vehicle body to flexibly follow the change in terrain.

The second center pin 310b is so placed as to pass, from above, through the support part 321, the link member 330, and the first protruding part 228.

The second center pin 310b is inserted into the through hole of the first protruding part 228, and is fixed by passing a thin part of an upper end part of the second center pin 310b through a fixing plate 322a and fastening, from above, the fixing plate 322a with a bolt 322b.

The support pin 341 is so formed as to pass through a support plate 342, which is placed in the upper part of the regulating member 500 including a pair of longitudinal plates extending from the vicinity of the middle part of the protruding part 422i to the vicinity of the edge of both ends in the front part of the recessed cutout part 422h, the link member 330, and the protruding part 422i.

Passing the thin part of the upper end part of the support pin 341 through the fixing plate 344 and fastening the fixing plate 344 to the support plate 342 with a bolt 343 fixes the support pin 341 to the inserted protruding part 422i's through hole into which the support pin 341 is inserted.

The link member 330 is formed of a rectangular plate material, and has through holes at both ends, a first spherical slide bearing 310b1 is mounted on the front end part, and a third spherical slide bearing 341a is mounted on the rear end part.

The second center pin 310b is inserted into the first spherical slide bearing 310b1, and the support pin 341 is inserted into the third spherical slide bearing 341a.

The first spherical slide bearing 310b1 is present on an imaginary axis on the second spherical slide bearing 310a1, bends the front-part vehicle body 200 relative to the rear-part vehicle body 400 with the imaginary axis as a fulcrum, and turns the front-part vehicle body 200 in the twist direction. Thus, when a large load is applied to the work device 100 and the rear-part vehicle body 400 floats during the wheel loader 1's working, the rear-part vehicle body 400's turn in the twist direction is suppressed, making it possible to maintain the stability of the vehicle body.

The support pin 341, since being supported on the rear-part side of the link support part 422, is supported inside the rear-part vehicle body frame 420, that is, is supported below the drive part.

Thus, the link member 330 is swingably supported inside the rear-part vehicle body frame 420, that is, is swingably supported below the drive part, making it possible to extend the link member 330 rearward.

According to the above configuration; for turning the front-part vehicle body 200 in the twist direction with the second spherical slide bearing 310a1 as the fulcrum, the front-part vehicle body 200 can be caused to follow the locus of turn in the twist direction above the second spherical slide bearing 310a1, so that the durability of the link part 300 can be improved, and at the same time, a comfortable steering operation can be maintained while causing the vehicle body to flexibly follow a change in terrain.

Since each linking of the front-part vehicle body frame 220 and the rear-part vehicle body frame 420 is performed via the second spherical slide bearing 310a1, the first spherical slide bearing 310b1, the third spherical slide bearing 341a, the fourth spherical slide bearing 452, and the fifth spherical slide bearing 451, the vehicle body is caused to flexibly follow not only a change in terrain on the right and left sides but also a change in terrain on the front and rear, thus making it possible to reduce the load applied to the vehicle body frame 10 during travel on a rough ground or the like.

The link member 330 is placed between the pair of longitudinal plates included in the regulating member 500, and the pair of longitudinal plates are so placed as to be narrowed from the front to the rear.

The pair of longitudinal plates are respectively bent toward the sides of the machine body in front of the link support part 422, and form a pair of first abutting parts 510a1 and 510a2.

The first abutting part 510a1 is joined to the upper part of the front plate 422c1, and the first abutting part 510a2 is joined to the upper part of the front plate 422c2, thereby causing durability against an impact from the front. Further, reinforcing second abutting parts 510b1 and 510b2 described below improves durability of the second abutting parts 510b1 and 510b2.

The first abutting parts 510a1 and 510a2, for swinging the front-part vehicle body 200 relative to the rear-part vehicle body 400 to the right and left with respect to the front-rear direction, set the upper limit of the amount of bending the front-part vehicle body 200 relative to the rear-part vehicle body 400 by causing the first abutting parts 510a1 and 510a2 to abut on the side parts of the first protruding part 228.

On the head end sides of the pair of longitudinal plates included in the regulating member 500, there are respectively so formed the second abutting parts 510b1 and 510b2 as to oppose the link member 330.

Concerning the second abutting parts 510b1 and 510b2, thick plates having the same height as the pair of longitudinal plates included in the regulating member 500 are respectively fastened to the pair of longitudinal plates by upper and lower bolts.

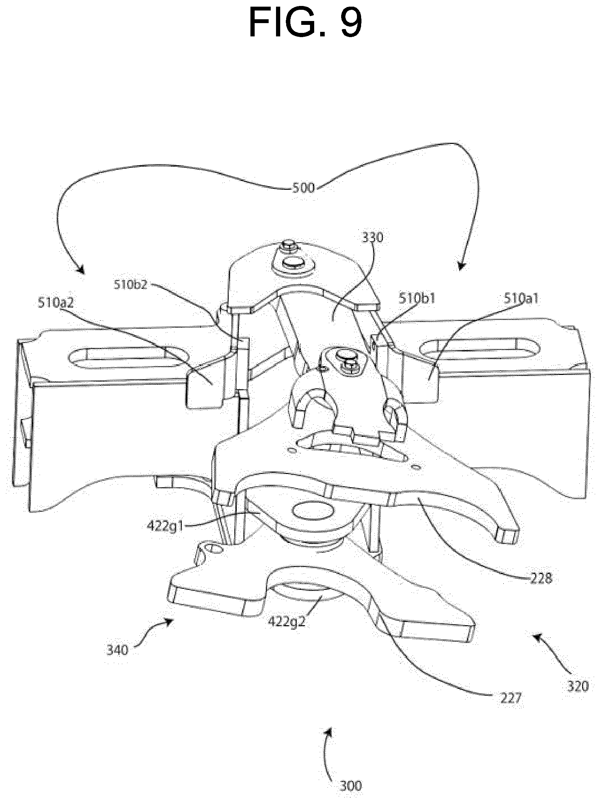

As shown in FIG. 9, the second abutting parts 510b1 and 510b2, for swinging the front-part vehicle body 200 relative to the rear-part vehicle body 400 to the right and left with respect to the up-down direction, set the upper limit of the amount of the front-part vehicle body 200's turn in the twist direction (roll direction) relative to the rear-part vehicle body 400 by causing the second abutting parts 510b1 and 510b2 to abut on the side parts of the link member 330.

The regulating member 500 can determine, with a simple structure, the upper limit of the amounts of the front-part vehicle body frame 220's bending and twisting relative to the rear-part vehicle body 400, making it possible to reduce the load applied to the vehicle body frame 10.

The invention according to the embodiment of the present invention can be specified as in the following appendices.

### (Appendix 1)

A work vehicle including: a rear-part vehicle body frame; and a front-part vehicle body frame so linked to the rear-part vehicle body frame as to be turnable perpendicularly to a horizontal direction and longitudinal direction of the rear-part vehicle body frame, wherein the work vehicle includes: a front-part joint part that is present at a rear end of the front-part vehicle body frame, and that is provided with a first spherical slide bearing and a second spherical slide bearing which are placed in an up-down direction, a rear-part joint part that is, via a third spherical slide bearing and via the second spherical slide bearing, linked with a link member linked with the front-part joint part via the first spherical slide bearing, and that is present at a head end of the rear-part vehicle body frame, and a cylinder that is linked with the front-part joint part via a fourth spherical slide bearing, and that is linked with the rear-part vehicle body frame via a fifth spherical slide bearing, and at least a part of the fourth spherical slide bearing is placed on the same horizontal plane as at least a part of the second spherical slide bearing.

### (Appendix 2)

The work vehicle according to appendix 1, wherein the first spherical slide bearing is placed above the second spherical slide bearing.

### (Appendix 3)

The work vehicle according to appendix 1 or 2, wherein the front-part joint part includes a first protruding part and a second protruding part that protrude from a rear end of the front-part vehicle body frame and are placed up and down, the fourth spherical slide bearing is pivotally linked to the second protruding part, and the second spherical bearing is mounted on the second protruding part.

### (Appendix 4)

The work vehicle according to appendixes 1 to 3, wherein the cylinder is placed below a drive part placed above the rear-part vehicle body frame.

### (Appendix 5)

The work vehicle according to appendixes 1 to 4, wherein a tube of the cylinder is placed below the drive part.

### (Appendix 6)

The work vehicle according to appendixes 1 to 5, wherein the third spherical slide bearing is placed below the drive part.

### (Appendix 7)

The work vehicle according to appendixes 1 to 6, wherein via a support shaft, the third spherical slide bearing is supported by a protruding part behind the rear-part joint part.

### (Appendix 8)

The work vehicle according to appendixes 1 to 7, including: a pair of regulating members so formed as to sandwich the link member in an upper part of the rear-part joint part.

### (Appendix 9)

The work vehicle according to appendixes 1 to 8, wherein a distance between the pair of regulating members narrows from the front to the rear.

Although the wheel loader as the work vehicle has been described as the example, the work vehicle is not limited to the wheel loader, and may be another work vehicle such as an articulated dump truck, a motor grader, or a macadam loader; further, although the engine as the prime mover has been described, the prime mover may be an electric motor.

The embodiment of the present invention has been described above, but the scope of the present invention is not limited thereto, and may be implemented with extension or modification without departing from the gist of the present invention.

### INDUSTRIAL APPLICABILITY

The present invention relates to a work vehicle and has industrial applicability.

### REFERENCE SIGNS LIST

1 wheel loader (work vehicle)
220 front-part vehicle body frame
310b1 first spherical slide bearing
310a1 second spherical slide bearing
320 front-part joint part
330 link member
341a third spherical slide bearing
420 rear-part vehicle body frame
340 rear-part joint part
452 fourth spherical slide bearing
451 fifth spherical slide bearing
450 steering cylinder (cylinder)

## Claims

1. A work vehicle comprising:
a rear-part vehicle body frame; and
a front-part vehicle body frame so linked to the rear-part vehicle body frame as to be turnable perpendicularly to a horizontal direction and longitudinal direction of the rear-part vehicle body frame,
wherein the work vehicle comprises:
a front-part joint part that is present at a rear end of the front-part vehicle body frame, and that is provided with a first spherical slide bearing and a second spherical slide bearing which are placed in an up-down direction,
a rear-part joint part that is, via a third spherical slide bearing and via the second spherical slide bearing, linked with a link member linked with the front-part joint part via the first spherical slide bearing, and that is present at a head end of the rear-part vehicle body frame, and
a cylinder that is linked with the front-part joint part via a fourth spherical slide bearing, and that is linked with the rear-part vehicle body frame via a fifth spherical slide bearing, and at least a part of the fourth spherical slide bearing is placed on the same horizontal plane as at least a part of the second spherical slide bearing.

2. The work vehicle according to claim 1, wherein the first spherical slide bearing is placed above the second spherical slide bearing.

3. The work vehicle according to claim 2, wherein the front-part joint part includes a first protruding part and a second protruding part that protrude from a rear end of the front-part vehicle body frame and are placed up and down, the fourth spherical slide bearing is pivotally linked to the second protruding part, and the second spherical bearing is mounted on the second protruding part.

4. The work vehicle according to claim 3, wherein the cylinder is placed below a drive part placed above the rear-part vehicle body frame.

5. The work vehicle according to claim 4, wherein a tube of the cylinder is placed below the drive part.

6. The work vehicle according to claim 5, wherein the third spherical slide bearing is placed below the drive part.

7. The work vehicle according to claim 6, wherein the third spherical slide bearing is supported by a protruding part behind the rear-part joint part, via a support shaft.

8. The work vehicle according to claim 7, comprising:
a pair of regulating members so formed as to sandwich the link member in an upper part of the rear-part joint part.

9. The work vehicle according to claim 8, wherein a distance between the pair of regulating members narrows from the front to the rear.
